# EUROPEAN PATENT APPLICATION

(11) **EP 4 787 587 A1**
(43) Date of publication of application: **05.08.2026**
(21) Application number: 24870011.4
(22) Date of filing: 18.07.2024
(51) Int. Cl.: H01M 50/35, H01M 50/244, H01M 50/249, H01M 50/289, H01M 10/613, H01M 10/625, H01M 10/658

(54) **EXHAUST STRUCTURE, BATTERY PACK, AND VEHICLE**

(30) Priority: 28.09.2023 CN 202322692246 U
(71) Applicant: BYD Company Limited, Shenzhen, Guangdong 518118 (CN)
(72) Inventor: ZHANG, Chengjun, Shenzhen, Guangdong 518118 (CN); ZHANG, Meixia, Shenzhen, Guangdong 518118 (CN); HUANG, Fei, Shenzhen, Guangdong 518118 (CN); GONG, Xubin, Shenzhen, Guangdong 518118 (CN); ZHANG, Zhonglin, Shenzhen, Guangdong 518118 (CN)
(74) Representative: Mathys & Squire
(86) International application number: PCT/CN2024/106223
(87) International publication number: WO 2025/066456

(57) **Abstract**

Disclosed is a vehicle with a battery pack. The battery pack includes at least one layer of cell group, each layer of cell group includes at least one sub-cell group, and each row of cells includes a plurality of cells. The battery pack has an exhaust structure disposed between adjacent sub-cell groups on a same layer, and the exhaust structure includes: an isolation member, a partition member, and at least two exhaust holes, the isolation member configured to isolate adjacent sub-cell groups. The partition members are disposed on two ends of the isolation member and connected to the isolation member, where the isolation member and the partition member are configured to define a plurality of exhaust passages. At least two exhaust holes are provided in the isolation member and located above corresponding exhaust passages, and communicate with the corresponding exhaust passages.

## Description

### CROSS-REFERENCE TO RELATED APPLICATIONS

The present disclosure claims priority to Chinese Patent Application No. 202322692246.7, filed on September 28, 2023 and entitled "EXHAUST STRUCTURE, BATTERY PACK, AND VEHICLE", which is incorporated herein by reference in its entirety for all purposes.

### TECHNICAL FIELD

The present disclosure relates to the field of batteries, and more specifically, to an exhaust structure, a battery pack, and a vehicle.

### BACKGROUND

A power battery pack, as an energy storage apparatus, is a core component of a hybrid electric vehicle and an electric vehicle. The power battery pack mainly includes a plurality of battery cells, a battery tray, and a cover plate. The battery tray is installed on the bottom of the vehicle. The cover plate and the battery tray are connected in a sealed manner, and jointly form a sealed space that accommodates the plurality of cells. To prevent explosion accidents, an explosion-proof valve is usually disposed on the battery cells. During use of the power battery pack, if air pressure in the sealed space increases to a specific level, the explosion-proof valve opens, allowing an air flow inside the cells to be discharged through the explosion-proof valve.

In related technologies, when a battery pack has two or more rows of cells and thermal runaway occurs in a specific cell, the thermal runaway may spread to other cells in the same row and affect cells in adjacent rows, leading to a chain reaction of thermal runaway throughout an entire power battery pack, thereby reducing use safety of the power battery pack. Therefore, how to collect and discharge waste gas is also a key technology in the battery pack.

### SUMMARY

The present invention is provided to resolve at least one of the foregoing problems. According to a first aspect of the present disclosure, an exhaust structure used in a battery pack is provided. The battery pack includes at least one layer of cell group, each layer of cell group includes at least two sub-cell groups, the sub-cell group includes a plurality of cells, the plurality of cells in the sub-cell group all extend in a first direction, the plurality of cells in the sub-cell group are arranged in a second direction, and the exhaust structure is disposed between two adjacent sub-cell groups on a same layer. The exhaust structure includes:
an isolation member, configured to isolate the two adjacent sub-cell groups;
partition members, disposed on two ends of the isolation member in the second direction and connected to the isolation member, wherein the isolation member and the partition members are configured to define a plurality of exhaust passages, each of the exhaust passages has opposite first and second openings on the two ends of the isolation member, the partition members seal the first and second openings, and each of the sub-cell groups on two sides of the isolation member corresponds to at least one of the exhaust passages; and
at least two exhaust holes, provided in the isolation member, located above corresponding exhaust passages, and communicating with the corresponding exhaust passages, wherein each exhaust passage corresponds to at least one exhaust hole.

In some embodiments, the partition member includes a baffle plate and a thermal insulation layer, and the thermal insulation layer is disposed on a surface of the baffle plate that faces the exhaust passage.

In some embodiments, the thermal insulation layer is made of a mica material.

In some embodiments, a first fastener portion is further disposed on the baffle plate, a second fastener portion that matches the first fastener portion is disposed on the isolation member, and the baffle plate interlocks with the isolation member by using the first fastener portion and the second fastener portion.

In some embodiments, a limiting portion is further disposed on the baffle plate, and a matching portion that matches the limiting portion is disposed on the isolation member.

In some embodiments, the partition member is adhered to the isolation member by using an adhesive.

In some embodiments, each exhaust passage has an air inlet, and the air inlet faces a cell adjacent to each exhaust passage.

In some embodiments, the isolation member includes a first side and a second side that is opposite to the first side, at least one exhaust passage in the plurality of exhaust passages is disposed on the first side, and at least one exhaust passage in the plurality of exhaust passages is disposed on the second side.

In some embodiments, the isolation member includes a substrate, a first extension portion and a second extension portion that extend from the substrate toward a cell on the first side, and a third extension portion and a fourth extension portion that extend from the substrate toward a cell on the second side; the first extension portion and the second extension portion are spaced apart; the first extension portion, the second extension portion, and the partition members are configured to define a first exhaust passage; the third extension portion and the fourth extension portion are individually spaced apart; and the third extension portion, the fourth extension portion, and the partition members are configured to define a second exhaust passage.

In some embodiments, the isolation member further includes a top plate; the substrate may include a first side plate, a second side plate spaced from and parallel to the first side plate, and a bottom plate; the top plate connects the top of the first side plate and the top of the second side plate; the bottom plate is connected to the bottom of the first side plate and the bottom of the second side plate, a part of the top plate that extends outside the first side plate is used as the first extension portion; and a part of the top plate that extends outside the second side plate is used as the third extension portion.

In some embodiments, a first bolt hole is provided in the bottom plate.

According to a second aspect of the present disclosure, a battery pack is provided. The battery pack includes:
a cabinet;
at least one layer of cell group, wherein the at least one layer of cell group is disposed in the cabinet; each layer of cell group includes at least two sub-cell groups, the sub-cell group includes a plurality of cells, the plurality of cells in the sub-cell group all extend in a first direction, and the plurality of cells in the sub-cell group are arranged in a second direction; and
the exhaust structure, wherein each exhaust structure is disposed between two adjacent sub-cell groups on a same layer.

In some embodiments, the cabinet includes a tray configured to support the at least one layer of cell group, and the exhaust structure is connected to the tray.

In some embodiments, a cooling plate is disposed below the at least one layer of cell group, the exhaust structure is connected to the tray through a connector, and the connector further passes through the cooling plate.

In some embodiments, the battery pack includes at least two layers of cell groups, the cooling plate is disposed between any two adjacent layers of cell groups, an intermediate beam is disposed on the tray, the exhaust structure is located above the intermediate beam, and the exhaust structure is connected to the intermediate beam of the tray through the connector.

In some embodiments, the intermediate beam is disposed between two adjacent sub-cell groups below the exhaust structure, the intermediate beam has at least two subspaces, adjacent subspaces are isolated from each other, a second bolt hole is provided on the top of the intermediate beam, the second bolt hole communicates with a subspace located on an uppermost layer, and the exhaust structure is connected to the intermediate beam of the tray through a first bolt hole in the exhaust structure, the second bolt hole, and the connector.

In some embodiments, the connector includes a protrusion, one of the intermediate beam and the exhaust structure is provided with the protrusion, the other is provided with a groove that matches the protrusion, and the protrusion is disposed in the groove.

In some embodiments, the battery pack includes:
the at least two layers of cell groups; and
the cabinet includes an accommodating cavity and a power distribution cavity, the power distribution cavity is located on one side of the accommodating cavity, the at least two layers of cell groups are disposed in the accommodating cavity, a gap is provided between a top surface of the exhaust structure and a cover plate of the cabinet, and gas discharged from an exhaust hole of the exhaust structure enters the power distribution cavity through the gap.

In some embodiments, the battery pack includes: the at least two layers of cell groups; and
the cabinet includes at least two layers of accommodating cavities and at least two power distribution cavities, the at least two power distribution cavities are in a one-to-one correspondence with the at least two layers of accommodating cavities, each power distribution cavity is provided in a corresponding accommodating cavity, the at least two layers of cell groups are in a one-to-one correspondence with the at least two layers of accommodating cavities, and each layer of cell group is disposed in a corresponding one layer of accommodating cavity, wherein
a gap is provided between the top surface of the exhaust structure and the cover plate of the cabinet, and gas discharged from the exhaust hole of the exhaust structure enters the power distribution cavity through the gap.

In some embodiments, an isolation member includes a substrate, a first extension portion that extend from the substrate toward a cell on a first side, and a third extension portion that extend from the substrate toward a cell on a second side; in a height direction of the accommodating cavity, a top surface of the substrate is higher than the first extension portion and the third extension portion; the top surface of the substrate abuts against the cover plate; gaps are provided between the first extension portion and the cover plate of the cabinet and between the third extension portion and the cover plate of the cabinet; and the height direction of the accommodating cavity is perpendicular to the first direction and the second direction.

In some embodiments, a first exhaust guide plate is disposed in the power distribution cavity, and gas entering the power distribution cavity is directed to two ends of the power distribution cavity through the first exhaust guide plate.

In some embodiments, an exhaust port or an explosion-proof valve is disposed on the cabinet, a second exhaust guide plate is further disposed in the power distribution cavity, the second exhaust guide plate covers the exhaust port or the explosion-proof valve, and gas is directed to the exhaust port or the explosion-proof valve via the second exhaust guide plate.

According to a third aspect of the present disclosure, a vehicle is provided. The vehicle includes: a vehicle body, and any one of the battery packs disposed on the vehicle body.

According to the exhaust structure, the battery pack, and the vehicle provided in embodiments of the present disclosure, the isolation member is disposed between the adjacent sub-cell groups on the same layer, to isolate the adjacent sub-cell groups; the isolation member and the partition member are configured to define the plurality of exhaust passages, so that gas generated by cells can be directly discharged into the exhaust passages, and gas in the exhaust passages may be directed to be discharged through the exhaust holes above the exhaust passages; the adjacent sub-cell groups are isolated by using the isolation member, to prevent gas discharged from the cells from spraying onto an adjacent sub-cell group in an opposite position, thereby preventing the gas discharged from the cells from spreading to other cells in a same row and damaging the other cells. This reduces a risk of thermal runaway, and improves safety of the battery pack.

### BRIEF DESCRIPTION OF DRAWINGS

To describe technical solutions in embodiments of the present invention more clearly, the following briefly describes the accompanying drawings required for describing embodiments. It is clear that the accompanying drawings in the following description show merely some embodiments of the present invention, and a person of ordinary skill in the art may still derive other drawings from these accompanying drawings without creative efforts.
FIG. 1 is a diagram of a structure of sub-cell groups in one layer of cell group according to an embodiment of the present invention;
FIG. 2 is a diagram of an exhaust structure according to an embodiment of the present invention;
FIG. 3A is a cross-sectional view of a battery pack having two layers of cell groups according to an embodiment of the present invention;
FIG. 3B is a cross-sectional view of a battery pack having two layers of cell groups according to an embodiment of the present invention;
FIG. 3C is an enlarged diagram of a structure of a region G in FIG. 3B;
FIG. 4 is a side view of the exhaust structure in FIG. 2 according to an embodiment of the present invention;
FIG. 5 is a cross-sectional view along a cross-sectional line AA in FIG. 4 according to an embodiment of the present invention;
FIG. 6 is a partially enlarged diagram of a structure of a region B in FIG. 5 according to an embodiment of the present invention;
FIG. 7 is a top view of an exhaust flow direction according to an embodiment of the present invention;
FIG. 8 is a partial diagram of a battery pack according to an embodiment of the present invention;
FIG. 9 is an enlarged diagram of a structure of a region H in FIG. 8; and
FIG. 10 is a diagram of a structure of a vehicle.

Reference numerals:
10: sub-cell group; 30: isolation member; 301: second fastener portion; 71: exhaust passage; 72: partition member; 73: exhaust hole;
721: baffle plate; 722: first fastener portion; 723: adhesive; 311: first side plate; 312: second side plate; 313: bottom plate; 731: first extension portion; 732: second extension portion; 733: third extension portion; 110: tray; 111: intermediate beam; 112: connector; 80: second exhaust guide plate; 801: air inlet.

### DESCRIPTION OF EMBODIMENTS

To make objectives, technical solutions, and advantages of the present invention clearer, the following describes example embodiments of the present invention in detail with reference to the accompanying drawings. Clearly, the described embodiments are merely a part rather than all of embodiments of the present invention. It will be understood that the present invention is not limited to the example embodiments described herein. All other embodiments obtained by a person skilled in the art based on embodiments of the present invention without creative efforts shall fall within the protection scope of the present invention.

In the following descriptions, a lot of specific details are given to provide a more thorough understanding of the present invention. However, it will be apparent to those skilled in the art that the present invention may be implemented without one or more of these details. In other examples, to avoid confusion with the present invention, some technical features known in the art are not described.

It will be understood that the present invention can be implemented in different forms and should not be construed as limited to embodiments described herein. On the contrary, these embodiments are provided so that this disclosure will be thorough and complete, and the scope of the present invention is fully conveyed to a person skilled in the art.

For a thorough understanding of the present invention, detailed structures are provided in the following descriptions, to explain the technical solution provided in the present invention. Optional embodiments of the present invention are described in detail below. However, in addition to these detailed descriptions, the present invention may have other implementations.

Implementations of the present invention are described in detail below with reference to the accompanying drawings. When no conflict occurs, the following embodiments and the features in the embodiments can be mutually combined.

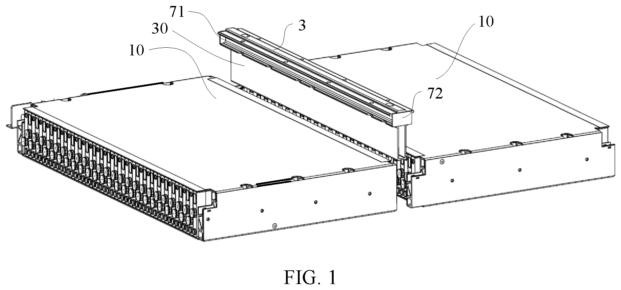

The present disclosure provides a battery pack. As shown in FIG. 1, the battery pack includes: a cabinet, at least one layer of cell group, and at least one exhaust structure 3. The at least one layer of cell group 10 is disposed in the cabinet. Each layer of cell group 10 includes at least two sub-cell groups 10, and each sub-cell group 10 includes a plurality of cells. The plurality of cells in the sub-cell group all extend in a first direction, namely, a length direction of the cells. The plurality of cells in the sub-cell group are arranged in a second direction. The second direction is different from the first direction. Where there are at least two layers of cell groups, the at least two layers of cell groups are stacked in a third direction. The first direction, the second direction, and the third direction are perpendicular to each other. The third direction is also a height direction of an accommodating cavity of the cabinet. In comparison with an existing cell arrangement manner of a battery pack, in this application, the battery pack includes the at least two layers of cell groups, and each sub-cell group in at least one layer of cell group is assembled in a module-free form, so that the cells can be more compactly arranged in the battery pack, fully utilizing a height space of the battery pack.

The exhaust structure 3 may be disposed between two adjacent sub-cell groups on the same layer. For example, one exhaust structure 3 is disposed between two adjacent sub-cell groups 10.

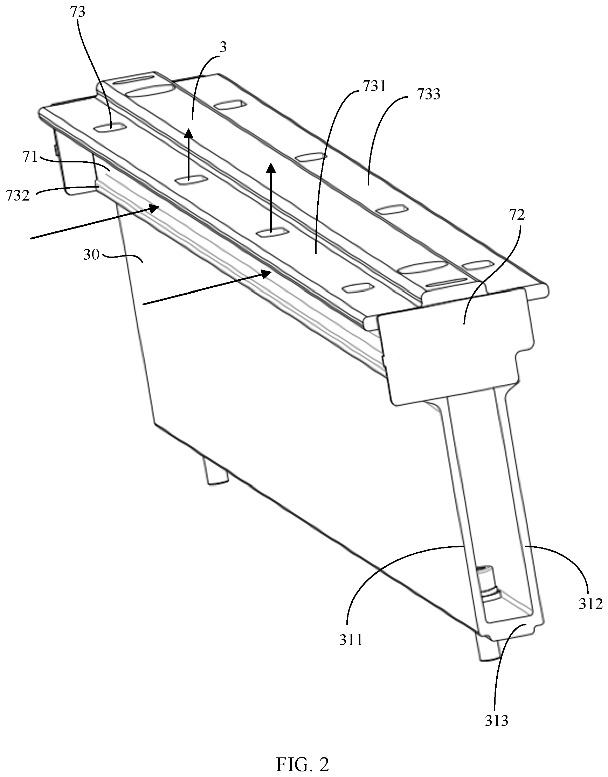

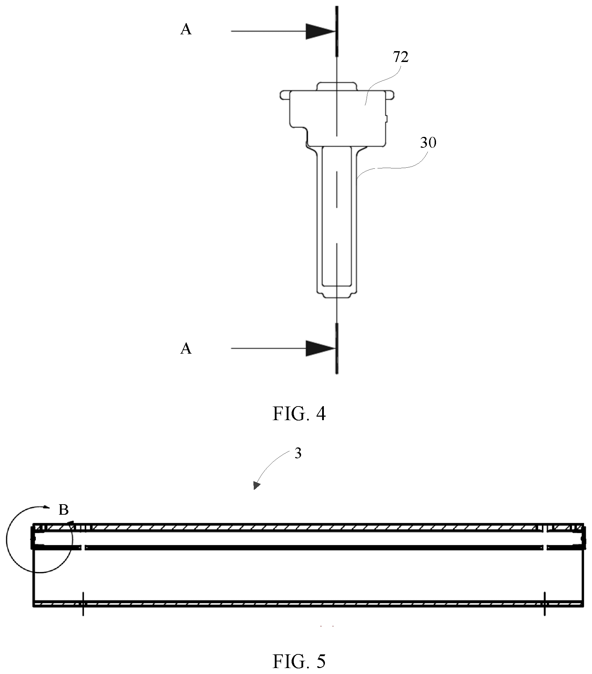

In the foregoing solution, the exhaust structure 3 is disposed between the two adjacent sub-cell groups 10 on the same layer, and the adjacent sub-cell groups 10 are isolated by using an isolation member 30 included in the exhaust structure 3. As shown in FIG. 2 to FIG. 6, an electrode is disposed on one end of the cells that is close to the exhaust structure 3, and the exhaust structure 3 includes the isolation member 30 and a partition member 72. The isolation member 30 and the partition members are configured to define a plurality of exhaust passages 71. Each of the exhaust passages 71 has opposite first and second openings on the two ends of the isolation member 30. The first and second openings of the exhaust passage 71 are sealed through the partition members 72 that are disposed on two ends of the isolation member 30 and that are connected to the isolation member 30, so that gas generated by the cells can be directly discharged into the exhaust passages 71, as shown by arrows in FIG. 2. In addition, because the partition member 72 seals the first and second openings, effective exhaust passages 71 are formed through matching of the isolation member 30 and the partition member 72, so that thermal runaway gas from cells that are disposed opposite to each other is directed to be discharged. Moreover, the isolation member 30 isolates the adjacent sub-cell groups 10, to prevent gas discharged from the cells from spraying onto cells in an adjacent sub-cell group 10 in an opposite position, thereby preventing the gas discharged from the cells from damaging the other cells. This reduces risk of thermal runaway. The following describes the foregoing structures in detail with reference to the accompanying drawings.

When a type of each cell is determined, for example, each cell may be a short cell, or a long cell. It should be noted that a short cell and a long cell are clearly defined in this field. The short cell is a cell whose length does not exceed a first preset value, and the long cell is a cell whose length exceeds a second preset value. The first preset value and the second preset value may be equal or unequal, and even the first preset value may be greater than the second preset value. For example, a length of the short cell may range from 400 mm to 900 mm, and a length of the long cell may range from 600 mm to 1200 mm. Referring to FIG. 1, a shape of the cell may be specifically a short cell or a long cell with a thin thickness. In some implementations, the cell may alternatively be a rectangular block cell with a slightly thick thickness. For example, the rectangular block cell may be a square aluminum-cased cell, or even a cylindrical cell.

In some implementations, electrodes of the cell are disposed on two ends of the cell in the first direction, and may be specifically positive and negative electrodes of the cell. The positive and negative electrodes of the cell may be respectively disposed on the two ends of the cell in the first direction. That is, one electrode is disposed on each end of the cell in the first direction, and the electrode may be a positive electrode or a negative electrode. Certainly, the positive and negative electrodes of the cell may alternatively be disposed only on one end of the cell in the first direction, or disposed on a surface of the cell in the third direction. As shown in FIG. 1, each sub-cell group 10 includes a plurality of cells, and the plurality of cells in each sub-cell group 10 are sequentially arranged in the second direction. The plurality of cells in each sub-cell group 10 are sequentially arranged in a straight line in the same second direction. It will be understood that the arrangement direction of each sub-cell group 10 is different from the first direction. For example, the second direction may be a direction substantially perpendicular to the first direction, so that positive and negative electrodes of each sub-cell group 10 are respectively located on the two sides of the sub-cell group 10, thereby increasing a spacing between different electrodes, and avoiding a risk of high-voltage arc breakdown. For example, when a cell with a thin thickness is used for the cell, the second direction may be a thickness direction of the cell, so that more cells can be arranged in each sub-cell group 10, increasing density of the cell, thereby increasing energy density of the battery pack.

When a quantity of layers of cell groups in the battery pack is chosen, the quantity of layers of cell groups that may be included in the battery pack may be two, three, four, five, or the like. The battery pack adopts an arrangement manner of at least two layers of cell groups, so that a space of the battery pack can be fully utilized, increasing energy density of the battery pack. When a quantity of rows of cells in each layer of cell group is chosen, for example, at least one layer of cell group may include one row of cells, two rows of cells, three rows of cells, four rows of cells, or more rows of cells. Each row of cells may be used as one sub-cell group 10. That is, a plurality of cells in each layer of cell group may be arranged in a single row, two rows, three rows, or the like. When at least two rows of cells are arranged in each layer of cell group, arrangement density of the cells can be increased, a space inside the battery pack is fully utilized, thereby increasing energy density of the battery pack. A stacking direction of the at least two layers of cell groups is the third direction, and the third direction is substantially perpendicular to both the first direction and the second direction, that is, the first direction, the second direction, and the third direction are perpendicular to each other. For example, when a long cell with a thin thickness is used for the cell, the third direction may be a width direction of the cell. It will be understood that the foregoing description only shows a stacking direction of different layers of cell groups.

In addition, in at least two layers of cell groups, at least a part of the cells may first be disposed in one module housing to assemble into a battery module. Specifically, a part of the cells may be disposed in the module housing to assemble into a battery module, or all cells may be disposed in the module housing to assemble into a battery module. In some embodiments, an uppermost layer of cell group in the at least two layers of cell groups is disposed in at least one module housing, and the at least one sub-cell group is disposed in each module housing. One row of cells is disposed in one module housing.

Optionally, at least an upper layer of cell group is one battery module. For example, regardless of whether the uppermost layer of cell group includes one sub-cell group or a plurality of sub-cell groups, all cells in the upper layer of cell group may be disposed in one module housing to assemble into one battery module. That is, in cells of the battery pack, individual cells in a part of sub-cell groups 10 may be directly arranged in the battery pack, or the sub-cell group including the plurality of cells 10 may be first assembled into one battery module, and then the battery module is disposed in the battery pack as one row of cells. Referring to FIG. 1, for example, each sub-cell group 10 of the uppermost layer of cell group of the at least two layers of cell groups may be assembled into one battery module, and the battery module may be assembled into the battery pack through hoisting, utilizing ease of assembly of the battery module to enhance assemblability and simplify overall assembly difficulty of the battery pack. In this case, all sub-cell groups in the lowermost layer of cell group in the at least two layers of cell groups may be assembled into CTP. It should be noted that the CTP is a module-free arrangement manner. That is, all cells in the lowermost layer of cell group may be directly arranged in the battery pack, increasing arrangement density of the cells. Certainly, the lowermost layer of cell group may also use a module arrangement form similar to that used by the uppermost layer of cell group, or another cell arrangement form. This is not limited herein. In addition, selection of a specific sub-cell group as the battery module is not limited to the foregoing manner in which all sub-cell groups 10 in the uppermost layer are used as the battery module. In addition, another disposition manner may be used.

When a quantity of layers of cell groups in the battery pack is chosen, the quantity of layers of cell groups in the battery pack may be at least two. Specifically, the quantity of layers of cell groups in the battery pack may be two, three, four, or more. The battery pack adopts an arrangement manner of at least two layers of cell groups, so that a space of the battery pack can be fully utilized, increasing energy density of the battery pack. When a quantity of sub-cell groups in each layer of cell group is chosen, for example, each layer of cell group may include two sub-cell groups 10, three sub-cell groups 10, four sub-cell groups 10, or more sub-cell groups 10. When at least two sub-cell groups 10 are arranged in each layer of cell group, arrangement density of the cells can be increased, a space inside the battery pack is fully utilized, thereby increasing energy density of the battery pack. The stacking direction of the at least two layers of cell groups is the third direction, that is, the stacking direction of the at least two layers of cell groups is different from the arrangement direction (namely, the second direction) of the plurality of cells in each sub-cell group and the first direction. Specifically, the first direction, the second direction, and the third direction are perpendicular to each other. For example, when a long cell is used for the cell, the third direction may be a width direction of the cell. It will be understood that the foregoing description only shows a stacking direction of different layers of cell groups.

In addition, the battery pack may further include a cabinet, and the at least two layers of cell groups are disposed in the cabinet. The cabinet may be disposed in a plurality of manners. For example, the cabinet may include a tray (not shown) configured to support the at least two layers of cell groups, may further include a cover plate covering the at least two layers of cell groups, and may further include a side beam connected between the cover plate and the tray. The side beam may be disposed on the tray, and a specific disposition manner may be, for example, but not limited to, soldering, screw connection, clamping, or integration.

In some embodiments, the battery pack includes the at least two layers of cell groups, the cabinet includes an accommodating cavity and a power distribution cavity, the power distribution cavity is located on one side of the accommodating cavity, the at least two layers of cell groups are disposed in the accommodating cavity, and the at least two layers of cell groups may correspond to a same power distribution cavity. A plurality of modules may be disposed in the power distribution cavity. A battery energy distribution unit may be disposed in the power distribution cavity, and a module such as a battery information collector may be disposed. Optionally, the at least two layers of cell groups may correspond to a same power distribution cavity, and may share the plurality of modules in the power distribution cavity.

In some other embodiments, the cabinet includes at least two layers of accommodating cavities and at least two power distribution cavities, the at least two power distribution cavities are in a one-to-one correspondence with the at least two layers of accommodating cavities, each power distribution cavity is provided in a corresponding accommodating cavity, the at least two layers of cell groups are in a one-to-one correspondence with the at least two layers of accommodating cavities, and each layer of cell group is disposed in a corresponding one layer of accommodating cavity. For example, the cabinet has a first end and a second end opposite to each other in the second direction, that is, a plurality of cells in each row of cells are sequentially arranged from the first end of the cabinet to the second end of the cabinet. A power distribution cavity may be disposed on the first end of the cabinet, so that the power distribution cavity is directly opposite to a non-electrode end of each row of cells, thereby reducing a risk that gas from the cells directly sprays onto a module, for example, but not limited to, the battery energy distribution unit 51 in the power distribution cavity during thermal runaway. In addition, this also facilitates an electrical connection between the module in the power distribution cavity 10 and each row of cells, thereby reducing a wiring length in the battery pack, and reducing a risk of high-voltage loop breakdown.

A plurality of modules may be disposed in the power distribution cavity. A battery energy distribution unit may be disposed in the power distribution cavity, and a module such as a battery information collector may be disposed. When the battery energy distribution unit is electrically connected to two layers of cell groups, the battery energy distribution unit may be electrically connected to at least one positive electrode and at least one negative electrode in the two layers of cell groups. For example, the battery energy distribution unit may have only one positive terminal and one negative terminal. The positive terminal is electrically connected to one positive electrode in the at least two layers of cell groups. A specific manner of implementing the electrical connection may be, for example, but not limited to, busbar, or flexible wire. Certainly, the manner of the electrical connection between the battery energy distribution unit and the two layers of cell groups is not limited to the foregoing manner. In addition, another manner may be used. For example, all cells in a same layer of cell group in the two layers of cell groups may be connected in series, and each layer of cell group is electrically connected to the battery energy distribution unit through a second busbar. That is, a plurality of cells in an upper layer of cell group are connected in series, a plurality of cells in a lower layer of cell group are connected in series, and then the upper layer of cell group and the lower layer of cell group are connected in series through the second busbar in the power distribution cavity, so that only one power distribution cavity needs to be disposed.

Two adjacent sub-cell groups 10 in the same layer of cell group may be electrically connected through the second busbar, that is, different sub-cell groups 10 in the same layer of cell group 10 are electrically connected through the second busbar. This can reduce a quantity of interfaces through which the battery energy distribution unit is electrically connected to the at least sub-cell group 10, and reduce a quantity of wires between the battery energy distribution unit and the two layers of cell groups, thereby reducing a risk of high-voltage breakdown. A material of the second busbar may be, for example, but not limited to, a conductive copper bar. The second busbar may be disposed on the first end or the second end of the cabinet, to prevent the second busbar from interfering with the at least two layers of cell groups.

One electric energy output interface may be disposed in the power distribution cavity, and the electric energy output interface may be directly electrically connected to the battery energy distribution unit in the power distribution cavity, to output electric energy externally. The electric energy output interface may be assembled in the power distribution cavity through a plug connector. Certainly, an electric energy output interface may also be disposed on the second end of the cabinet, that is, two electric energy output interfaces are disposed in the battery pack. The electric energy output interface may be assembled on the second end of the cabinet through a plug connector. The electric energy output interface on the second end of the cabinet may be electrically connected to the battery energy distribution unit in a plurality of manners. For example, the electric energy output interface may be electrically connected to the battery energy distribution unit through a first busbar. The first busbar may be specifically, for example, but not limited to, a conductive copper bar. Alternatively, the first busbar may be located above the two layers of cell groups, to prevent the first busbar from affecting an arrangement structure of the cells. As described above, the first busbar is isolated from the upper layer of cell group by using a first insulating film, to prevent a fault such as an open circuit and a short circuit from occurring between the first busbar and the upper layer of cell group.

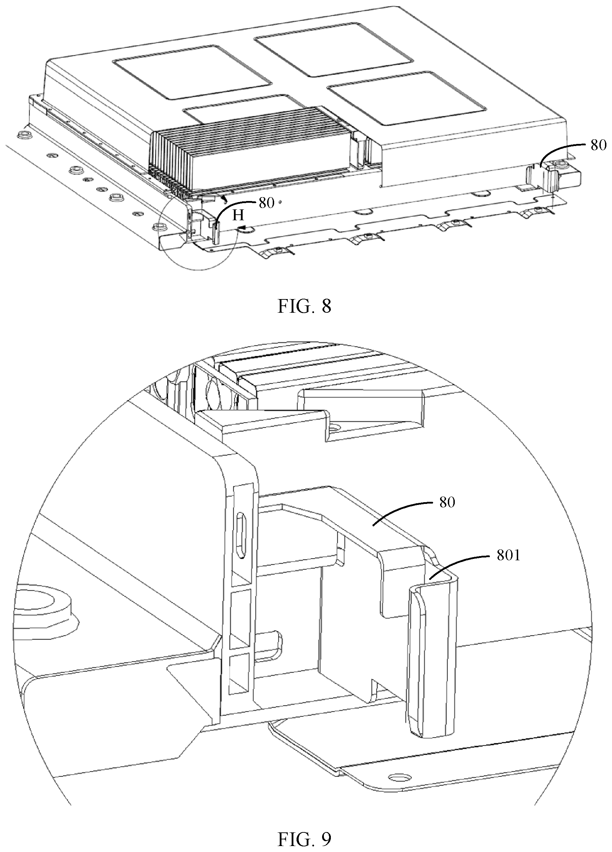

The following describes some details of the exhaust structure 3 with reference to FIG. 1 to FIG. 9. The exhaust structure 3 is disposed between the two adjacent sub-cell groups, and is also located in the cabinet, and is configured to discharge gas generated by the cells out of the battery pack. The exhaust structure 3 may be specifically disposed in a plurality of manners. For example, a disposition manner is described below.

It should be first noted that, the exhaust structure 3 described below may be used in a battery pack including at least one layer of cell group 10, that is, the at least one layer of cell group 10 is disposed in a cabinet of the battery pack. For example, a quantity of layers of cell groups in the battery pack may be one, two, or more. The at least one layer of cell group 10 includes at least two sub-cell groups 10. In some embodiments, each layer of cell group includes at least two sub-cell groups, and a quantity of sub-cell groups included in each layer of cell group may be two, three, four, or the like. Each sub-cell group 10 may include a plurality of cells. Electrodes are respectively disposed on two opposite ends of each cell in the first direction, and a plurality of cells in a same sub-cell group 10 are sequentially arranged in the second direction. The first direction, the second direction, and the third direction may be set as described above. Details are not described herein again.

It is worth mentioning that in a same layer of cell group, a stacking direction of the cells is the same as an extension direction of the exhaust structure 3. There is a spacing between two adjacent rows of cells, and the exhaust structure 3 is disposed in the spacing.

Referring to FIG. 1, the exhaust structure 3 includes an isolation member 30. One isolation member 30 is disposed between any adjacent sub-cell groups 10 in the same layer of cell group 10, that is, the isolation member 30 is disposed between adjacent sub-cell groups 10 on a same layer, to isolate cells in different sub-cell groups on a same layer into two independent spaces. This prevents gas generated by different rows of cells from spraying onto an adjacent row of cells and damaging the adjacent row of cells. It will be understood that a quantity of isolation members 30 is specifically related to a quantity of layers of cell groups and a quantity of rows included in each layer of cell group.

Optionally, the isolation member 30 may be a composite material structure formed by pultruding. The pultruded composite material has high-temperature resistance performance and insulation performance at a high temperature, outperforming a metal material and a plastic material.

In some embodiments, the exhaust structure 3 includes a plurality of exhaust passages 71, each of the exhaust passages 71 has first and second openings on two ends (that is, corresponding to two end portions of the isolation member 30), and the two end portions are two end portions in the second direction (namely, an arrangement direction of each row of cells). An airflow direction of the exhaust passage 71 is substantially parallel to the second direction, so that the exhaust passage 71 is opposite to positions of all electrodes of all cells in a corresponding sub-cell group 10. This facilitates discharge of gas sprayed from the electrodes on one side of the same row of cells into the exhaust passage 71. Optionally, each exhaust passage 71 has an air inlet, and the air inlet faces a cell adjacent to each exhaust passage 71, that is, faces an electrode of the adjacent cell, so that gas generated by each cell flows into the exhaust passage 71 through the air inlet. There may be one air inlet or a plurality of air inlets. One air inlet may correspond to one row of cells, or the plurality of air inlets may be disposed on the exhaust passage 71, and each air inlet corresponds to one cell.

In some embodiments, the isolation member 30 includes a first side and a second side that is opposite to the first side, at least one exhaust passage 71 in the plurality of exhaust passages 71 is disposed on the first side, and at least one exhaust passage 71 in the plurality of exhaust passages 71 is disposed on the second side. An exhaust passage 71 on the first side is configured to collect thermal runaway gas (for example, high-temperature gas) discharged from an adjacent cell. An exhaust passage 71 on the second side is configured to collect thermal runaway gas (for example, high-temperature gas) discharged from an adjacent cell.

In some embodiments, as shown in FIG. 1 to FIG. 6, the exhaust structure 3 further includes a partition member 72. The partition member 72 is disposed on two ends of the isolation member 30, connected to the isolation member 30, and configured to cover the first and second openings, so that effective exhaust passages 71 are formed through matching of the isolation member 30 and the partition member 72. Further, the partition member 72, the isolation member 30, and an adjacent sub-cell group 10 are configured to define exhaust passages, so that thermal runaway gas from cells that are disposed opposite to each other is directed to be discharged. In some embodiments, a surface of the partition member 72 that is connected to the isolation member 30 may be further partially attached to outer side walls of cells on two sides of the partition member 72, to more compactly seal a spacing between adjacent sub-cell groups.

Optionally, the partition member 72 may be any appropriate member. For example, the partition member 72 includes a baffle plate 721. The baffle plate 721 may be a flat plate structure or another appropriate structure, and may be formed by using an injection molding process, or made of another appropriate plastic material.

Further, to improve high-temperature resistance performance of the partition member 72, the partition member 72 in the present disclosure further includes a thermal insulation layer (not shown). The thermal insulation layer is disposed on a surface of the baffle plate 721 that faces the exhaust passage 71. The thermal insulation layer can prevent the baffle plate 721 from coming into direct contact with high-temperature gas and adversely affecting the baffle plate 721, thereby improving the high-temperature resistance performance of the partition member 72.

Optionally, the thermal insulation layer may be made of any appropriate high-temperature resistant material, for example, the thermal insulation layer is made of a mica material, and may be disposed on the baffle plate 721 through adhering or another appropriate manner.

Alternatively, the partition member 72 may be connected to the isolation member 30 in any appropriate connection manner, for example, one or more of interlocking, bonding, or screwing.

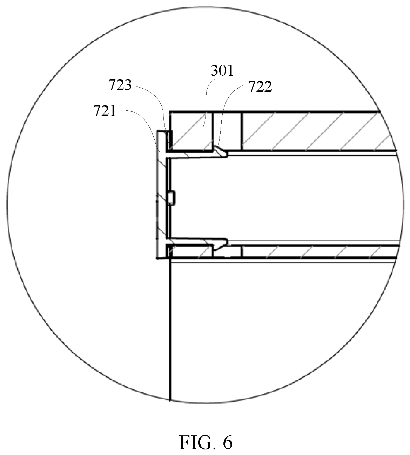

In some embodiments, as shown in FIG. 6, a first fastener portion 722 is further disposed on the baffle plate 721, a second fastener portion 301 that matches the first fastener portion 722 is disposed on the isolation member 30, and the baffle plate 721 interlocks with the isolation member 30 by using the first fastener portion 722 and the second fastener portion 301. The second fastener portion 301 may be a flange or another appropriate structure disposed inside a space enclosed by isolation members 30. One end of the first fastener portion 722 is connected to a surface of the baffle plate 721 that faces the isolation member 30. The other end of the first fastener portion 722 has a protrusion portion that interlocks with the second fastener portion 301. Interlocking between the first fastener portion 722 and the second fastener portion 301 a serves a connection function, and provides a positioning function, to position the partition structure at an installation position on the isolation member 30.

In some other embodiments, to improve connection reliability and air tightness, the partition member 72 is adhered to the isolation member 30 by using an adhesive 723. The adhesive 723 may be structural adhesive, foam adhesive, or other appropriate adhesive 723. In addition to bonding the partition member 72 to the isolation member 30, the adhesive 723 also serves a sealing function.

The partition member 72 may be fastened to the isolation member 30 in two manners, namely, interlocking and bonding, so that the partition member 72 can be more stably disposed on the isolation member 30, thereby improving connection reliability and air tightness.

In some embodiments, to accurately align the partition member 72 with the isolation member 30 during assembly, a limiting portion is further disposed on the baffle plate 721, and a matching portion that matches the limiting portion is disposed on the isolation member 30. Optionally, one of the limiting portion and the matching portion may be a protrusion structure, and the other may be a groove structure. The protrusion structure may be disposed in the groove structure, to implement a limiting function, where the limiting portion can be selectively disposed.

In an embodiment, two exhaust passages 71 between two adjacent sub-cell groups 10 may be stacked in the third direction. As described above, the third direction may be perpendicular to both the first direction and the second direction. This can reduce a width space of the battery pack occupied by the two exhaust passages 71, and improve space utilization. Certainly, the two exhaust passages 71 may be disposed side by side in the first direction. In addition, both the two exhaust passages 71 between the two adjacent sub-cell groups 10 may be disposed on an isolation member 30 that is also located between the two adjacent sub-cell groups 10, to fasten the exhaust passage 71. In a more preferred manner, the two exhaust passages 71 may be integrated with the isolation member 30, thereby improving structural integration and facilitating assembly.

In some embodiments, the isolation member 30 may include a substrate, a first extension portion 731 and a second extension portion 732 that extend from the substrate toward a cell on the first side, and a third extension portion 733 and a fourth extension portion that extend from the substrate toward a cell on the second side; the first extension portion 731 and the second extension portion 732 are spaced apart; the first extension portion 731, the second extension portion 732, and the partition members 72 are configured to define a first exhaust passage, wherein the first extension portion 731 may further abut against a cell adjacent to the first extension portion 731, for example, abut against an end surface or a top surface of the adjacent cell; the third extension portion 733 and the fourth extension portion are spaced apart; and the third extension portion 733, the fourth extension portion, and the partition members 72 are configured to define a second exhaust passage, where the third extension portion 733 may further abut against a cell adjacent to the third extension portion 733, for example, abut against an end surface or a top surface of the adjacent cell. The isolation member 30 further includes a top plate. The substrate may include a first side plate 311, a second side plate 312 spaced from and parallel to the first side plate 311, and a bottom plate 313. The top plate connects the top of the first side plate 311 and the top of the second side plate 312. The bottom plate 313 is connected to the bottom of the first side plate 311 and the bottom of the second side plate 312. The first side plate 311, the second side plate 312, the top plate, and the bottom plate 313 enclose a cavity. A part of the top plate that extends outside the first side plate 311 is used as the first extension portion 731. A part of the top plate that extends outside the second side plate 312 is used as the third extension portion 733.

For example, to connect the exhaust structure to the tray 110, a first bolt hole is provided in the bottom plate 313, and is used to fasten the exhaust structure to the tray 110, for example, an intermediate beam 111 on the tray 110. In some embodiments, the substrate has a cavity (for example, a cavity above the bottom plate 313) inside. This can reduce a weight of the exhaust structure, and reserve sufficient installation space for a bolt that passes through the first bolt hole, facilitating assembly. Further, the exhaust structure 3 further includes at least two exhaust holes 73 that are provided in the isolation member 30 and located above corresponding exhaust passages 71, and communicate with the corresponding exhaust passages 71, wherein each exhaust passage 71 corresponds to at least one exhaust hole 73. For example, if the first extension portion 731 is located above the second extension portion 732, an exhaust hole 73 is provided in the first extension portion 731, and passes through the first extension portion 731 to communicate with the exhaust passage 71. There may be one exhaust hole or a plurality of exhaust holes 73. Where there are the plurality of exhaust holes 73, the plurality of exhaust holes 73 may be spaced apart in the second direction, for example, at an equal spacing or at an unequal spacing. In some embodiments, the third extension portion 733 is disposed above the fourth extension portion, an exhaust hole 73 is also provided in the third extension portion 733, and the exhaust hole 73 communicates with an exhaust passage 71 below the third extension portion 733.

In addition, in some embodiments, an exhaust port is further disposed on the cabinet of the battery pack, and each exhaust passage 71 may communicate with the exhaust port on the cabinet by using an exhaust hole 73, to discharge gas discharged from the exhaust passage 71 out of the cabinet. The isolation member 30 is disposed between the two adjacent sub-cell groups 10 on the same layer, to isolate the two adjacent sub-cell groups 10. One exhaust passage 71 is disposed on two opposite ends of each sub-cell group 10 in the first direction, and each exhaust passage 71 communicates with the exhaust port on the cabinet, so that gas generated by the cell may be directly discharged into the exhaust passage 71, and may be discharged through an exhaust hole 73 corresponding to the exhaust passage 71. Moreover, the isolation member 30 isolates the two adjacent sub-cell groups 10, to prevent gas discharged from the cells from spraying onto an adjacent sub-cell group 10 in an opposite position, thereby preventing gas discharged from each sub-cell group 10 from damaging other cells. This reduces a risk of thermal runaway.

Referring to FIG. 1, when there are at least two layers of cell groups, the at least two layers of cell groups may be stacked in the third direction. For a specific stacking manner, refer to the foregoing descriptions. Details are not described herein again. It should be noted that where there are the at least two layers of cell groups, an isolation member 30 and an exhaust passage 71 may be disposed in each of the at least two layers of cell groups. That is, the isolation member 30 is disposed in each layer of cell group, to isolate the two adjacent sub-cell groups 10 on the same layer, to prevent gas generated by adjacent sub-cell groups 10 from spraying onto each other. In addition, this helps discharge gas generated by each layer of cell group through the exhaust passage 71 disposed in the layer of cell group, preventing gas generated by different layers of cell groups from interfering with each other. In some embodiments, where there are the at least two layers of cell groups, the exhaust structure 3 may be disposed between two adjacent sub-cell groups 10 located on an uppermost layer.

In some embodiments, a cooling plate may be disposed between any two adjacent layers of cell groups in the at least two layers of cell groups, to improve heat dissipation efficiency and effect of the cooling plate for the cells. Different layers of cell groups are isolated by cooling plates, so that the cells are arranged in a grid shape. The cooling plate may be specifically a direct cooling plate, or a water cooling plate. In the foregoing manner, a heat radiation area between the cooling plates and the cells can be increased, and cooling and heat dissipation effect can be improved. In addition, the cooling plates are arranged between the different layers of cell groups, so that the different layers of cell groups are effectively isolated, thereby preventing the different layers of cell groups from interfering with each other, and alleviating thermal runaway and high pressure. That is, the cooling plate is a complete structure, and can completely cover surfaces of all sub-cell groups 10 in a same layer of cell group. The two adjacent layers of cell groups are isolated by the cooling plate, preventing gas discharged by the different layers of cell groups from interfering with each other.

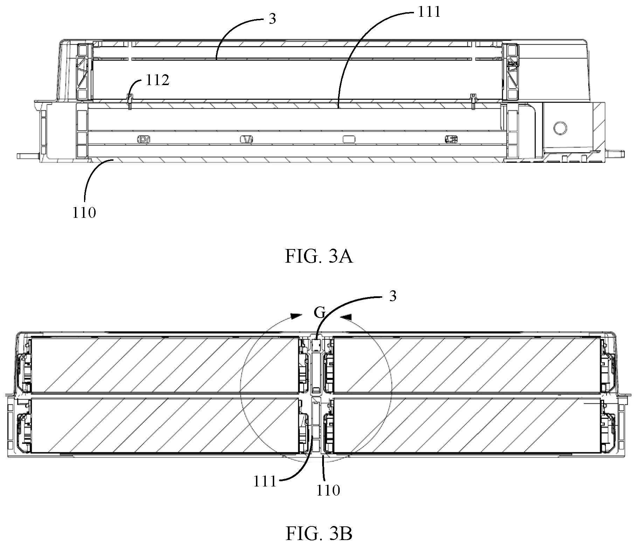

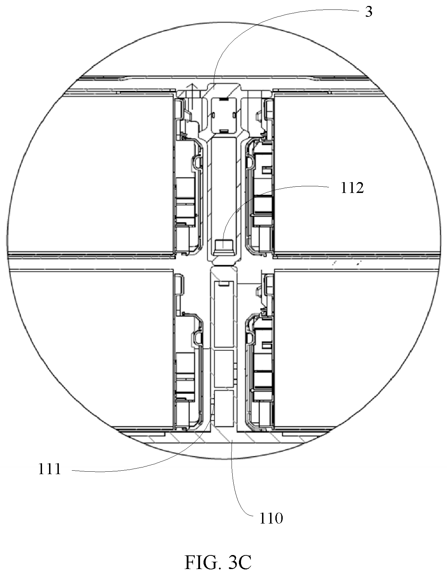

In some embodiments, as shown in FIG. 3A to FIG. 3C, the cabinet includes a tray 110 configured to support the at least one layer of cell group, and the exhaust structure 3 is connected to the tray 110, so that the exhaust structure 3 is stably fastened between the cells. The exhaust structure 3 may be connected to the tray 110 in any appropriate manner. For example, the cooling plate is disposed below at least one layer of cell group, the exhaust structure 3 is located above the intermediate beam 111, and the exhaust structure 3 is connected to the tray 110 through a connector 112, and the connector 112 further passes through the cooling plate. Specifically, for example, the cabinet of the battery further includes the intermediate beam 111. The intermediate beam 111 is connected to the tray 110. For example, the intermediate beam 111 is integrated with the tray 110. A bottom end of the exhaust structure 3 passes through the cooling plate and is connected to the intermediate beam 111, to be fastened to the tray 110. In some specific embodiments, the connector 112 may also be a protrusion, one of the exhaust structure 3 and the intermediate beam 111 is provided with the protrusion, and the other is provided with a groove that matches the protrusion. The protrusion may pass through the cooling plate and may be at least partially disposed in the groove. In this case, the exhaust structure 3 is connected to the intermediate beam 111, that is, the exhaust structure 3 is connected to the tray 110. Optionally, the protrusion may be in interference fit with the groove, to allow a more secure connection. Alternatively, in another embodiment, the exhaust structure 3 may be connected to the intermediate beam 111 through a fastener such as a bolt. For example, the first bolt hole is provided on the bottom (for example, the bottom plate 313) of the isolation member 30 of the exhaust structure 3, and a second bolt hole is provided on the top of the intermediate beam 111. The exhaust structure 3 is connected to the intermediate beam 111 through the first bolt hole, the second bolt hole, and the bolt.

The intermediate beam 111 may be disposed between sub-cell groups in a lower layer of the exhaust structure 3, the intermediate beam 111 may have at least two sub-cavities inside, and air intake holes are provided in two side walls of cells adjacent to the intermediate beam 111. Gas discharged from the cells may enter one or more sub-cavities through the air intake holes. For example, gas discharged from the cells on two sides of the intermediate beam 111 enters one sub-cavity, or separately enters different sub-cavities. The sub-cavities may be used as exhaust passages, to direct the gas to side beams on two sides, and then direct the gas to be discharged through the side beams. Optionally, the exhaust structure 3 and the intermediate beam 111 are independently disposed. The intermediate beam 111 may be integrated with the tray 110, thereby improving a modal of the entire battery pack. In addition, an exhaust port and an exhaust passage are further disposed in the intermediate beam 111. An uppermost sub-cavity of the intermediate beam 111 may be isolated from a lower sub-cavity of the intermediate beam 111, and the second threaded hole provided in the intermediate beam 111 communicates with the uppermost sub-cavity. All sub-cavities of the intermediate beam 111 are isolated from each other, preventing gas from leaking to another sub-space that is used as the exhaust passage. The exhaust structure 3 in the present disclosure can prevent gas generated by cells from spraying onto each other, and functions as an exhaust passage.

It will be noted that, when the battery pack includes the at least two layers of cell groups, an exhaust structure 3 may be disposed between adjacent sub-cell groups in each layer of cell group located above a lowermost layer of cell group, but may not be disposed between adjacent sub-cell groups located on the lowermost layer of cell group.

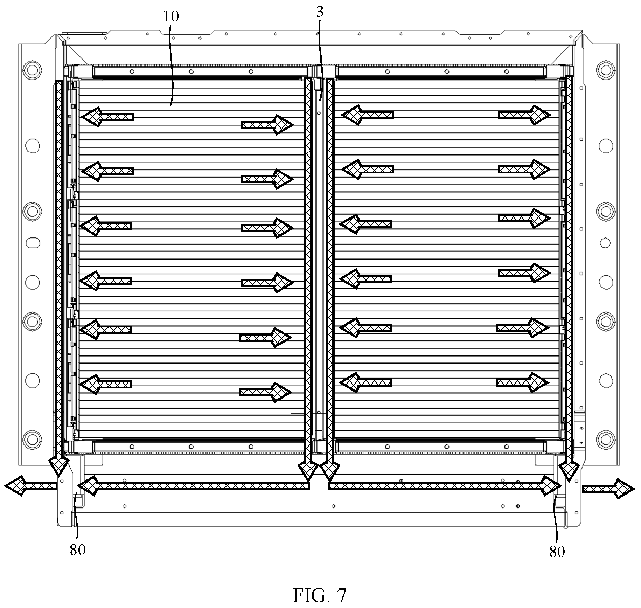

In some embodiments, as shown in FIG. 7, FIG. 8, and FIG. 9, a gap is provided between a top surface of the exhaust structure 3 and a cover plate of the cabinet. For example, the isolation member 30 of the exhaust structure 3 includes a substrate, a first extension portion 731 that extends from the substrate toward a cell on the first side, and a third extension portion 733 that extends from the substrate toward a cell on the second side. In a height direction (namely, the third direction) of the accommodating cavity, a top surface of the substrate is higher than the first extension portion 731 and the third extension portion 733; the top surface of the substrate abuts against the cover plate of the cabinet; gaps are provided between the first extension portion 731 and the cover plate of the cabinet and between the third extension portion 733 and the cover plate of the cabinet; and the height direction of the accommodating cavity of the cabinet is perpendicular to the first direction and the second direction. The gap is used as an exhaust passage. Gas discharged from the exhaust hole of the exhaust structure 3 enters the power distribution cavity through the gap. A first exhaust guide plate is disposed in the power distribution cavity, and gas entering the power distribution cavity is directed to two ends of the power distribution cavity through the exhaust guide plate. Second exhaust guide plates 80 are further disposed in the power distribution cavity, for example, the second exhaust guide plates 80 are disposed on two ends of the power distribution cavity, and the gas is directed to a corresponding exhaust port on the cabinet via the second exhaust guide plates 80. An exhaust port may be disposed at any position of the cabinet, or one or more exhaust ports may be disposed on the cabinet. For example, an explosion-proof valve may be further disposed at the exhaust port, to facilitate pressure relief of gas generated in the battery pack, thereby reducing a possibility of an explosion of the battery pack. When the explosion-proof valve is disposed on the cabinet, gas is directed to a corresponding explosion-proof valve on the cabinet through the second exhaust guide plate 80. In some other embodiments, a gap is provided between the top surface of the exhaust structure 3 and the cover plate of the cabinet. The gap is used as an exhaust passage, and gas discharged from the exhaust hole of the exhaust structure 3 is directed to the side beam through the gap, and is then directed to be discharged through the side beam.

Because the partition member 72 seals the first and second openings of the exhaust passage in the arrangement direction of the cells, high-temperature gas is not discharged into the accommodating cavity of the cabinet, so that the high-temperature gas can only be discharged through the exhaust hole into the gap between the top surface of the exhaust structure 3 and the cover plate of the cabinet. In this case, an exhaust direction is changed, and the high-temperature gas is directed to a predetermined position such as the power distribution cavity.

For example, the first exhaust guide plate may be formed by side beams connected to the cover plate, and the side beams extend downward for a specific length from the cover plate, or the first exhaust guide plate may be perpendicular to a length extension direction of the exhaust structure 3, for example, the first exhaust guide plate extends for a specific length in the first direction.

In some embodiments, the second exhaust guide plate 80 may cover the exhaust port or the explosion-proof valve, to prevent gas at the exhaust port or the explosion-proof valve from entering another position of the battery pack, so that gas entering the power distribution cavity can be more quickly discharged through the exhaust port or the explosion-proof valve. The second exhaust guide plate 80 has an air inlet 801. Gas enters a space between the second exhaust guide plate 80 and the cabinet through the air inlet 801, and is then discharged through the exhaust port or the explosion-proof valve.

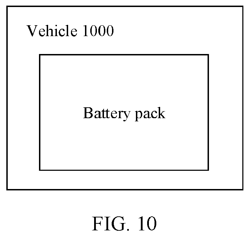

In addition, the present disclosure provides a vehicle 1000. As shown in FIG. 10, the vehicle 1000 includes: a vehicle body, and any one of the battery packs disposed on the vehicle body. The vehicle 1000 may be specifically, for example, but not limited to, a passenger vehicle, a truck, or a special-purpose engineering vehicle. The vehicle body includes structures such as a frame, a wheel, a transmission, and a steering wheel, and any one of the battery packs disposed on the vehicle body.

The present invention is described with the foregoing embodiments, but it will be understood that the foregoing embodiments are merely for purposes of illustration and description, and are not intended to limit the present invention to the scope of the described embodiments. In addition, a person skilled in the art may understand that, the present invention is not limited to the foregoing embodiments, and more variations and modifications may be made according to teachings of the present invention, and all these variations and modifications fall within the protection scope claimed in the present invention. The scope of protection of the present invention is defined by the appended claims and their equivalents.

## Claims

1. An exhaust structure, used in a battery pack, wherein the battery pack comprises at least one layer of cell group, each layer of cell group comprises at least two sub-cell groups (10), the sub-cell group (10) comprises a plurality of cells, the plurality of cells in the sub-cell group all extend in a first direction, the plurality of cells in the sub-cell group (10) are arranged in a second direction, the exhaust structure is disposed between two adjacent sub-cell groups on a same layer, and the exhaust structure comprises:
an isolation member (30), configured to isolate the two adjacent sub-cell groups (10);
partition members (72), disposed on two ends of the isolation member (30) in the second direction and connected to the isolation member (30), wherein the isolation member (30) and the partition members (72) are configured to define a plurality of exhaust passages (71), each of the exhaust passages (71) has opposite first and second openings on the two ends of the isolation member (30), the partition members (30) seal the first and second openings, and each of the sub-cell groups (10) on two sides of the isolation member (30) corresponds to at least one of the exhaust passages (71); and
at least two exhaust holes (73), provided in the isolation member (30), located above corresponding exhaust passages (71), and communicating with the corresponding exhaust passages (71), wherein each exhaust passage (71) corresponds to at least one exhaust hole (73).

2. The exhaust structure according to claim 1, wherein the partition member (72) comprises a baffle plate (721) and a thermal insulation layer, and the thermal insulation layer is disposed on a surface of the baffle plate (721) that faces the exhaust passage (71).

3. The exhaust structure according to claim 2, wherein the thermal insulation layer is made of a mica material.

4. The exhaust structure according to claim 2 or 3, wherein a first fastener portion (722) is further disposed on the baffle plate (721), a second fastener portion (301) that matches the first fastener portion (722) is disposed on the isolation member (30), and the baffle plate (721) interlocks with the isolation member (30) by using the first fastener portion (722) and the second fastener portion (301).

5. The exhaust structure according to any one of claims 2 to 4, wherein a limiting portion is further disposed on the baffle plate (721), and a matching portion that matches the limiting portion is disposed on the isolation member (30).

6. The exhaust structure according to any one of claims 1 to 5, wherein the partition member (72) is adhered to the isolation member (30) by using an adhesive (723).

7. The exhaust structure according to any one of claims 1 to 6, wherein each exhaust passage (71) has an air inlet (801), and the air inlet (801) faces a cell adjacent to each exhaust passage (71).

8. The exhaust structure according to any one of claims 1 to 7, wherein the isolation member (30) comprises a first side and a second side that is opposite to the first side, at least one exhaust passage (71) in the plurality of exhaust passages (71) is disposed on the first side, and at least one exhaust passage (71) in the plurality of exhaust passages (71) is disposed on the second side.

9. The exhaust structure according to claim 8, wherein the isolation member (30) comprises a substrate, a first extension portion (731) and a second extension portion (732) that extend from the substrate toward a cell on the first side, and a third extension portion (733) and a fourth extension portion that extend from the substrate toward a cell on the second side; the first extension portion (731) and the second extension portion (732) are spaced apart; the first extension portion (731), the second extension portion (732), and the partition members (72) are configured to define a first exhaust passage; the third extension portion (733) and the fourth extension portion are individually spaced apart; and the third extension portion (733), the fourth extension portion, and the partition members (72) are configured to define a second exhaust passage.

10. The exhaust structure according to claim 9, wherein the isolation member (30) further comprises a top plate; the substrate may comprise a first side plate (311), a second side plate (312) spaced from and parallel to the first side plate (311), and a bottom plate (313); the top plate connects the top of the first side plate (311) and the top of the second side plate (312); the bottom plate (313) is connected to the bottom of the first side plate (311) and the bottom of the second side plate (312), a part of the top plate that extends outside the first side plate (311) is used as the first extension portion (731); and a part of the top plate that extends outside the second side plate (312) is used as the third extension portion (732).

11. The exhaust structure according to claim 10, wherein a first bolt hole is provided in the bottom plate (313).

12. A battery pack, comprising:
a cabinet;
at least one layer of cell group, wherein the at least one layer of cell group is disposed in the cabinet; each layer of cell group comprises at least two sub-cell groups (10), the sub-cell group (10) comprises a plurality of cells, the plurality of cells in the sub-cell group (10) all extend in a first direction, and the plurality of cells in the sub-cell group (10) are arranged in a second direction; and
at least one exhaust structure according to any one of claims 1 to 11, wherein each exhaust structure is disposed between two adjacent sub-cell groups (10) on a same layer.

13. The battery pack according to claim 12, wherein the cabinet comprises a tray (110) configured to support the at least one layer of cell group, and the exhaust structure is connected to the tray (110).

14. The battery pack according to claim 13, wherein a cooling plate is disposed below the at least one layer of cell group, the exhaust structure is connected to the tray (110) through a connector (112), and the connector (112) further passes through the cooling plate.

15. The battery pack according to claim 14, wherein the battery pack comprises at least two layers of cell groups, the cooling plate is disposed between any two adjacent layers of cell groups, an intermediate beam (111) is disposed on the tray (110), the exhaust structure is located above the intermediate beam (111), and the exhaust structure is connected to the intermediate beam (111) of the tray (110) through the connector (112).

16. The battery pack according to claim 15, wherein the intermediate beam (111) is disposed between two adjacent sub-cell groups (10) below the exhaust structure, the intermediate beam (111) has at least two subspaces, adjacent subspaces are isolated from each other, a second bolt hole is provided on the top of the intermediate beam (111), the second bolt hole communicates with a subspace located on an uppermost layer, and the exhaust structure is connected to the intermediate beam (111) of the tray (110) through a first bolt hole in the exhaust structure, the second bolt hole, and the connector (112).

17. The battery pack according to any one of claims 14 to 16, wherein the connector (112) comprises a protrusion, one of the intermediate beam (111) and the exhaust structure is provided with the protrusion, the other is provided with a groove that matches the protrusion, and the protrusion is disposed in the groove.

18. The battery pack according to any one of claims 12 to 17, wherein the battery pack comprises:
the at least two layers of cell groups; and
the cabinet comprises an accommodating cavity and a power distribution cavity, the power distribution cavity is located on one side of the accommodating cavity, the at least two layers of cell groups are disposed in the accommodating cavity, a gap is provided between a top surface of the exhaust structure and a cover plate of the cabinet, and gas discharged from an exhaust hole of the exhaust structure enters the power distribution cavity through the gap.

19. The battery pack according to any one of claims 12 to 18, wherein the battery pack comprises: the at least two layers of cell groups; and
the cabinet comprises at least two layers of accommodating cavities and at least two power distribution cavities, the at least two power distribution cavities are in a one-to-one correspondence with the at least two layers of accommodating cavities, each power distribution cavity is provided in a corresponding accommodating cavity, the at least two layers of cell groups are in a one-to-one correspondence with the at least two layers of accommodating cavities, and each layer of cell group is disposed in a corresponding one layer of accommodating cavity, wherein
a gap is provided between the top surface of the exhaust structure and the cover plate of the cabinet, and gas discharged from the exhaust hole of the exhaust structure enters the power distribution cavity through the gap.

20. The battery pack according to claim 18 or 19, wherein an isolation member (30) comprises a substrate, a first extension portion (731) that extend from the substrate toward a cell on a first side, and a third extension portion (733) that extend from the substrate toward a cell on a second side; in a height direction of the accommodating cavity, a top surface of the substrate is higher than the first extension portion (731) and the third extension portion (733); the top surface of the substrate abuts against the cover plate; gaps are provided between the first extension portion (731) and the cover plate of the cabinet and between the third extension portion (733) and the cover plate of the cabinet; and the height direction of the accommodating cavity is perpendicular to the first direction and the second direction.

21. The battery pack according to claim 18 or 19, wherein a first exhaust guide plate (80) is disposed in the power distribution cavity, and gas entering the power distribution cavity is directed to two ends of the power distribution cavity through the first exhaust guide plate (80).

22. The battery pack according to claim 18 or 19, wherein an exhaust port or an explosion-proof valve is disposed on the cabinet, a second exhaust guide plate is further disposed in the power distribution cavity, the second exhaust guide plate covers the exhaust port or the explosion-proof valve, and gas is directed to the exhaust port or the explosion-proof valve via the second exhaust guide plate.

23. A vehicle, comprising:
a vehicle body; and
the battery pack according to any one of claims 12 to 22 disposed on the vehicle body.
